# EUROPÄISCHE PATENTSCHRIFT

(11) **EP 3 705 427 B1**
(45) Veröffentlichungstag und Bekanntmachung des Hinweises auf die Patenterteilung: **23.04.2025**
(21) Anmeldenummer: 20161327.0
(22) Anmeldetag: 05.03.2020
(51) Int. Cl.: B65H 5/22, B26D 7/32, B65H 29/10, B65H 5/10, B65G 47/91, B26D 7/18, B25J 15/08, B25J 15/06, B25J 15/00, B65H 29/24, B25J 9/00, B25J 9/02, B26D 7/06

(54) **SYSTEM ZUM ABNEHMEN UND BEWEGEN EINES GEWEBEMATERIALTEILS, ENTSPRECHENDES SYSTEM ZUM SCHNEIDEN UND ABTRANSPORTIEREN VON GESCHNITTENEN GEWEBEMATERIALTEILEN, UND VERFAHREN ZUM ABNEHMEN UND BEWEGEN EINES GEWEBEMATERIALTEILS**
DEVICE FOR REMOVAL OF FABRIC PIECES, CORRESPONDING SYSTEM FOR CUTTING AND REMOVAL OF CUT FABRIC PIECES, AND METHOD FOR REMOVAL OF FABRIC PIECES
DISPOSITIF DESTINÉ À L'ENLÈVEMENT DES PIÈCES DE MATIÈRE TISSULAIRE, INSTALLATION CORRESPONDANTE POUR COUPER ET TRANSPORTER PIÈCES EN TISSU COUPÉES, ET PROCÉDÉ D'ENLÈVEMENT DE PIÈCES EN TISSU

(30) Priorität: 05.03.2019 DE 102019105495
(43) Veröffentlichungstag der Anmeldung: 09.09.2020
(73) Patentinhaber: Held-Systems GmbH, 63150 Heusenstamm (DE)
(72) Erfinder: Held, Gunnar, 63150 Heusenstamm (DE); Zinke, Achim, 63150 Heusenstamm (DE)
(74) Vertreter: Ter Meer Steinmeister & Partner

(56) Entgegenhaltungen:
- EP-A1- 3 409 397
- CN-A- 108 772 885
- FR-A1- 2 702 781
- US-A- 4 284 382
- US-A- 5 013 211

## Beschreibung

Die Erfindung betrifft ein System gemäß Anspruch 1, ein Verfahren zum Abnehmen und Bewegen wenigstens eines Gewebematerialteils gemäß Anspruch 13, und ein System zum Schneiden und Abtransportieren von geschnittenen Gewebematerialteilen gemäß Anspruch 14.

Gewebematerialteile, beispielsweise Stoffe, faserverstärkte Gewebe und OPW-Gewebe werden auf Fördereinrichtungen transportiert. Eine derartige Fördereinrichtung ist in der Lage breite Gewebebahnen 20 auf einer horizontalen Fläche zu fördern. Die breiten Gewebebahnen werden auf der Fördereinrichtung geschnitten. Meist erfolgt das Schneiden derartiger Gewebematerialteile mittels Lasertechnologie. Hierbei kann ein kontinuierliches und/oder auch ein diskontinuierliches Schneidverfahren angewendet werden. Die Gewebematerialteile sind üblicherweise in den Gewebebahnen so angeordnet, dass sie zueinander versetzt sind, sogenanntes Nesting, um eine möglichst hohe Ausbeute von fertiggeschnittenen Gewebematerialteilen aus einem Gewebeband zu erhalten.

Häufig werden mehrere Gewebematerialteile nebeneinander aus einer Bahn geschnitten, so dass nach Beendigung des Schneidvorgangs mehrere Gewebematerialteile am Ende der Fördereinrichtung ankommen und dort meist zeitgleich bzw. beinahe zeitgleich abgenommen werden müssen.

US 4 284 282 A zeigt eine Vorrichtung zur Abnahme von Stoffen. Die Vorrichtung hat ein Förderband E auf dem mindestens zwei parallele Bahnen von Teilen transportiert werden und eine Abnahmevorrichtung, die die Teile in Förderrichtung der des Förderbandes aufnimmt. Die Abnahmevorrichtung bringt die Teile zu einer Ablageposition.

CN 108 772 885 A zeigt drei verschiedene Vorrichtungen, die eine Produktionslinie zum Entstauben und Beschneiden von Wandplatten bilden. Die erste Vorrichtung ist ein Beladungsgerät mit einer Unterdruckspannvorrichtung. Die zweite Vorrichtung ist eine erste Förderwalzenvorrichtung mit einem Trimmgerät, das ein Schneidemesser und eine Rolle zum Entfernen von Staub umfasst. Die dritte Vorrichtung zeigt eine zweite Förderwalzenvorrichtung von der mittels einer Unterdruckspannvorrichtung die geschnittenen Wandplatten aus der Produktionslinie entfernt werden.

US 5 013 211 zeigt ein System zur Bearbeitung von Furnierplatten mit einem unteren Mechanismus zum Tragen einer ersten Furnierplatte zu einer ersten Position und einem zweiten Mechanismus zum Tragen einer zweiten Furnierplatte zu einer zweiten Position, die oberhalb der ersten Position liegt, um die ersten und die zweiten Furnierplatten, die aus verschiedenen Richtungen ankommen am gleichen Platz abzulagern.

EP 3 409 397 A1) zeigt vier verschiedene Vorrichtungen, die eine Produktionslinie zur Bearbeitung von Plattenmaterial bilden. Die erste Vorrichtung ist eine Maschine zur Bearbeitung des Plattenmaterials, die zweite Vorrichtung ist ein Tisch zum Entladen, die dritte Vorrichtung ist ein Tisch zum vorübergehenden Platzieren des Plattenmaterials und die vierte Vorrichtung ist ein Sortiertisch. Das Plattenmaterial wird durch einen Träger von Vorrichtung zu Vorrichtung transportiert.

FR 2 702 781 A1 zeigt eine Schneidemaschine zum Schneiden eines Werkstücks mit einem Zuführförderer zum Zuführen des Werkstücks, einer Positionskorrelationseinheit zum Durchführen der Positionskorrelation des auf dem Zuführförderer zugeführten Werkstücks, einer Positionskorrelations-Korrektureinheit zum Steuern und Berechnen der Abweichung des Werkstücks, eine Schneideinrichtung zum Schneiden des auf dem Zuführförderer beförderten Werkstücks, eine Aufnahmeeinheit zum Aufnehmen der von der Schneideinrichtung geschnittenen Teile durch ein Saugsystem, einen Entladeförderer zum Befördern der von der Kommissioniereinheit aufgenommenen Teile, und eine Synchronisationseinrichtung zum Synchronisieren der einzelnen Komponenten.

Bisher werden bei derartigen Anlagen die geschnittenen Gewebematerialteile und insbesondere OPW-Gewebeteile, die für Airbags verwendet werden, per Hand von der Fördereinrichtung der Schneidanlage entfernt. Ebenso ist es in speziellen Anwendungen möglich, eine robotergestützte Abnahme der geschnittenen Gewebematerialteile zu realisieren.

Ein Nachteil der manuellen Abnahme ist die personalaufwendige und eintönige Handhabung der Gewebematerialteile.

Das Verwenden von Robotern zum Abnehmen der Gewebematerialteile ist einerseits sehr komplex und teuer, da verschiedene Roboter gleichzeitig die geschnittenen Gewebematerialteile abnehmen müssen. Darüber hinaus erfordern Roboter einen großen Bewegungsraum, da sie Drehbewegungen ausführen und somit die Anzahl von anzuordnenden Robotern um die Fördereinrichtung herum begrenzt ist.

Daher ergibt sich die Aufgabe, eine Abnahmevorrichtung zum Greifen/Abnehmen und Bewegen von einem oder mehreren Gewebematerialteilen anzugeben, als auch ein Verfahren zum automatisierten Abnehmen von Gewebematerialteilen bereitzustellen.

Die auf derartigen Anlagen zu schneidenden Gewebematerialteile weisen häufig große Dimensionen auf, so dass bei der Handhabung aufgrund der großen Abmessungen ein sogenannter "Segeleffekt" auftreten kann, da das Gewebematerialteil nicht luftdurchlässig ist und beim Wegbewegen ein "Segeleffekt" auftritt, der ein wiederholbares Ablegen an vorgesehenen Ablagepositionen erschwert.

Eine weitere Anforderung neben dem effektiven Abnehmen der geschnittenen Gewebematerialteile ist die beschädigungsfreie Handhabung des Gewebes und ein sicheres Abnehmen des geschnittenen Gewebematerialteils von der Fördereinrichtung, da die Gewebematerialteile aus biegeschlaffen Geweben bestehen und daher ein automatisches Greifen bzw. Abnehmen erschwert ist.

Eine weitere Anforderung ist die Anpassbarkeit der Abnahmevorrichtung an sich verändernde Schnittmuster und veränderte Dimensionen der zu fertigenden Gewebematerialteile, da in derartigen Anlagen verschiedene Losgrößen von Gewebematerialteilen geschnitten werden und die Abnahmevorrichtung flexibel für verschiedene Arten von Gewebe als auch für verschiedene Größen der Gewebematerialteile einsetzbar sein muss.

Diese Aufgaben werden durch die Merkmale der unabhängigen Ansprüche gelöst.

Der Erfindung basiert auf der grundlegenden Idee, der Förderrichtung nachgeschaltet oder nachgeordnet eine Vorrichtung zu platzieren, die wenigstens ein Gewebematerialteil oder mehrere Gewebematerialteile abnehmen kann und in Förderrichtung wegbewegen kann. Durch das Abtransportieren in Förderrichtung ist der erforderliche Platzbedarf für die Abnahmevorrichtung reduziert. Außerdem lässt sich mit einer derartigen Anordnung auch eine mehrspurige Zuführung von Gewebematerialteilen handhaben.

Um die Aufgabe zu lösen, wird eine Abnahmevorrichtung zum Abnehmen und Bewegen eines Gewebematerialteils angegeben. Das wenigstens eine Gewebematerialteil liegt auf einer Fördereinrichtung auf. Die Abnahmevorrichtung umfasst wenigstens einen der Fördereinrichtung zugeordneten Linearträger, der sich in Förderrichtung erstreckt. Dieser weist eine Länge auf, die der Strecke zwischen Abnahmeposition und Ablageposition entspricht. Durch die nachgeschaltete Anordnung der Abnahmevorrichtung hinter der Fördereinrichtung kann der Linearträger auch länger als 2m, insbesondere zwischen 2m und 5m lang sein, so dass die Ablageposition auch weiter weg von der Fördereinrichtung bzw. der Abnahmeposition platziert sein kann.

Am Linearträger ist ein Abnahmemodul befestigt, das entlang des Linearträgers in Förderrichtung bewegbar ist. Der wenigstens eine Linearträger ist an einem Traggestell befestigt, welches auf dem Boden aufsteht und die Förderreinrichtung wenigstens teilweise überlappt. Das Abnahmemodul weist eine Abnehmvorrichtung auf, die zum Abnehmen des Gewebematerialteils eingerichtet ist, wobei das Abnahmemodul eingerichtet ist, das Gewebematerialteil von einer Abnahmeposition zu einer Ablageposition zu bewegen.

Die Abnehmvorrichtung ist vorzugsweise eine Greifvorrichtung.

Die Abnahmevorrichtung überlappt wenigstens teilweise mit der Fördereinrichtung. Insbesondere können die Abnahmemodule von oben in Richtung die Förderebene abgesenkt werden, um das oder die Gewebematerialteile abzunehmen. Die Abnahmevorrichtung ist in Förderrichtung hinter der Fördereinrichtung angeordnet, sodass die Abnahmevorrichtung örtlich als auch bezgl. des Prozesses hinter der Fördereinrichtung angeordnet ist. Dies hat den Vorteil, dass die abzunehmenden Gewebematerialteile in ihrer Bewegungsrichtung weiter transportiert werden und kein Richtungswechsel erforderlich ist.

Die Abnahmevorrichtung ist bezüglich ihrer Position zur Fördereinrichtung verstell- oder bewegbar. D.h. die Abnahmeposition A auf der Fördereinrichtung kann an den Prozess oder die Abmessungen der Gewebematerialteile angepasst werden.

Vorzugsweise kann das Abnehmen des einen oder der mehreren Gewebematerialteile während einer gestoppten oder während einer laufenden Fördereinrichtung erfolgen.

Vorzugsweise ist die Fördergeschwindigkeit der Fördereinrichtung langsamer als die Transportgeschwindigkeit der Abnahmevorrichtung.

Vorzugsweise fördert die Fördereinrichtung mehrere Gewebematerialteile parallel zu einander auf benachbarten Bahnen.

Das Abnahmemodul ist am Linearträger jeweils in der gleichen Ebene in Förderrichtung und entgegengesetzt zur Förderrichtung bewegbar. D.h. der Hin und Rückweg bzw. die Ebene der Bewegung des Abnahmemoduls ist identisch.

Vorzugsweise ist die Abnehmvorrichtung in vertikaler Richtung verstellbar. Dadurch kann ein sicheres Abnehmen des Gewebematerialteils von der Fördereinrichtung sichergestellt werden, ohne dass es aufgrund der sich bewegenden Fördereinrichtung zu einer Beschädigung des Gewebematerialteils bzw. zu Unfällen beim Abnehmen kommen kann.

Es ist vorgesehen, dass die Abnehmvorrichtung/Greifvorrichtung das Gewebematerialteil erfasst und in vertikaler Richtung von der Fördereinrichtung aufnimmt und anhebt.

In einer vorteilhaften Ausgestaltung kann die Abnehmvorrichtung ausschließlich eine oder mehrere Saugvorrichtungen und keine Klemmvorrichtung umfassen.

Dazu kann die Abnehmvorrichtung wenigstens eine Saugvorrichtung aufweisen, die das Gewebematerialteil von einer Oberseite des Gewebematerialteils ansaugt. Das Ansaugen bietet den Vorteil, dass das Gewebematerialteil möglichst nicht beschädigt wird und trotzdem ein sicheres Anheben ermöglicht wird.

In einer anderen vorteilhaften Ausgestaltung kann die Abnehmvorrichtung ausschließlich eine oder mehrere Klemmvorrichtungen umfassen und keine Saugvorrichtung.

Dazu ist die Abnehmvorrichtung als Klemmvorrichtung ausgebildet, die das Gewebematerialteil von einer Oberseite und von einer Unterseite des Gewebematerialteils einklemmt. Durch das Einklemmen ist ein sicherer Transport möglich.

Auch die Saugvorrichtung ist in vertikaler Richtung verstellbar, dadurch wird ein Einklemmen des Gewebematerialteils leichter möglich.

Ein sicheres Anheben und Abtransportieren kann durch ein Klemmelement unterstützt werden, welches das Gewebematerialteil von einer Unterseite des Gewebematerialteils gegen die Saugvorrichtung presst und somit eine sichere Fixierung für den Transport bereitstellt.

Um die Abnahmevorrichtung möglichst flexibel für beispielsweise mehrere Gewebematerialteile oder verschiedene Größen von Gewebematerialteilen zu gestalten, kann vorgesehen sein, dass der Linearträger und/oder das Abnahmemodul quer zur Förderrichtung verstellbar ist/sind. Dies hat den Vorteil, dass der Linearträger oder auch das Abnahmemodul oder beide quer zur Förderrichtung versetzt werden können. Dadurch lassen sich Abtransportwege auf verschiedenen Bahnen realisieren, d.h. der Weg hin zur Ablageposition kann auf einer anderen Y-Bahn erfolgen als der Weg zurück zur Abnahmeposition. Mit dem quer verstellbaren Abnahmemodul lassen sich einfach Anpassungen an verschieden große Gewebematerialteile vornehmen.

Um einen sicheren Transport zu gewährleisten, kann sich die Greifvorrichtung an der Abnahmeposition des Gewebematerialteils vertikal tiefer befinden, als während einer Bewegung innerhalb eines Transportbereichs des Gewebematerialteils.

Um ein sicheres Abnehmen der Gewebematerialteile zu ermöglichen, ist es vorteilhaft, diese für die Abnahme bzw. den Transport hochzuheben.

Es ist vorgesehen, dass das Abnahmemodul das Gewebematerialteil nach einem Greifvorgang in Förderrichtung bewegt und die Greifvorrichtung das Gewebematerialteil an der Ablageposition freigibt. Dadurch lassen sich wiederholbare Ablagevorgänge realisieren.

Der Linearträger ist nach einem Greifvorgang quer zur Förderrichtung verstellbar. Somit kann vermieden werden, dass sich bei einem weiteren Abnahmemodul beide Abnahmemodule berühren oder das transportierte Gewebematerialteil mit dem zurücklaufenden Abnahmemodul interferiert.

Ebenso kann das Abnahmemodul während einer Bewegung von der Ablageposition zurück zur Abnahmeposition um einen vorbestimmten Abstand quer zur Förderrichtung versetzt werden, im Vergleich zu einer Bewegung von der Abnahmeposition zur Ablageposition. Das Gewebematerialteil kann verschiedene einlagige und/oder mehrlagige Gewebe oder Materialen umfassen, vorzugsweise ist das Gewebematerialteil ein OPW-Teil (one piece woven).

Das Gewebematerialteil wird vorzugsweise an seiner Frontseite gegriffen und/oder angehoben. Dies ist insbesondere bei großen Gewebematerialteilen hilfreich, da diese dann von dem laufenden oder gestoppten Förderband angehoben bzw. weggezogen werden können, indem das Abnahmemodul in Förderrichtung bewegt wird.

Das Abnahmemodul weist vorzugsweise einen Sensor, bspw. einen Zugwiderstandssensor auf, um festzustellen, ob das Gewebematerialteil aus der Gewebebahn frei geschnitten ist. Der Sensor kann auch als optischer Sensor ausgebildet sein, um festzustellen, ob das Gewebematerialteil aus der Gewebebahn frei geschnitten ist. Wenn das Gewebematerialteil nicht vollständig frei geschnitten ist, wird der Sensor beim Abnehmen einen Zugwiderstand und/oder eine verbleibende Verbindung zwischen dem Restgewebe und dem auszuschneidenden Gewebematerialteil feststellen. Falls ein Wert des Zugwiderstands einen vorbestimmten Zugwiderstand überschreitet oder mittels optischer Erkennung eine verbleibende Verbindung zwischen dem Restgewebe und dem auszuschneidenden Gewebematerialteil erkannt wird, wird ein Steuersignal an die Fördereinrichtung und/oder Abnahmevorrichtung ausgegeben. Dadurch lassen sich Beschädigungen an der Anlage bzw. an den Gewebematerialteilen oder Fehlproduktionen vermeiden. Es können auch andere Sensoren, bspw. optische Sensoren, für das Erkennen eines nicht geschnittenen Gewebematerialteils verwendet werden, wobei abhängig von deren Ausgabesignal ein Fortfahren das Förderbetriebs und/oder Abnahmevorgangs durchgeführt wird, d.h. die Fördereinrichtung und/oder Abnahmevorrichtung abhängig von diesem Ausgabesignal gesteuert wird

Vorzugsweise umfasst die Saugvorrichtung mehrere Saugbereiche oder -segmente, die sich separat ansteuern lassen. Dadurch können ausreichend große Saugkräfte auch über größere Flächen zur Verfügung gestellt werden. Darüber hinaus können bei kleinen Gewebematerialteilen nur ein oder wenige Saugbereiche aktiviert werden.

Die Abnahmevorrichtung enthält vorzugsweise mehrere Linearträger mit jeweils einem Abnahmemodul. Dadurch lassen sich von einer Gewebebahn mehrere Gewebematerialteile abheben. Dies kann vorzugsweise gleichzeitig erfolgen, wobei eine Gruppe von Abnahmemodulen die Gewebematerialteile greift und abtransportiert und eine andere Gruppe von Abnahmemodulen entweder auf die nächsten Gewebematerialteile wartet oder auf dem Rückweg von der Ablageposition zur Abnahmeposition ist. Vorzugsweise ist jedes Abnahmemodul einer Förderspur von Gewebematerialteilen der Fördereinrichtung zugeordnet.

Vorzugsweise können wenigstens zwei Linearträger vorgesehen sein, an denen ein gemeinsames Abnahmemodul angeordnet und in Förderrichtung bewegbar ist.

Das gemeinsame Abnahmemodul kann eines oder mehrere Gewebematerialteile gleichzeitig und/oder ein oder mehrere Gewebematerialteile selektiv in verschiedenen Bahnen abnehmen.

In einer weiteren Ausgestaltung kann das Abnahmemodul nur eine Saugvorrichtung aufweisen, die über die gesamte Breite des Gewebebandes verläuft bzw. diese überdeckt.

Wenn das Abnahmemodul bzw. die Abnehmvorrichtung auf die Förderrichtung abgesenkt wird, werden alle ankommenden Gewebematerialteile angesaugt und lassen sich anheben und zur Ablageposition transportieren.

Vorzugsweise ist in Förderrichtung zwischen der Bearbeitungsstation (Schneidprozess) und der Abnahmevorrichtung eine Vorrichtung zur Abnahme des Restgewebes angeordnet. Dadurch wird sichergestellt, dass an der Abnahmeposition A nur noch die ausgeschnittenen Gewebematerialteile ankommen und abgenommen werden können. Dies ist insbesondere dann vorteilhaft, wenn nur ein gemeinsames Abnahmemodul verwendet wird, welches keine selektive Abnahme von Gewebematerialteilen in verschiedenen Bahnen ermöglicht, sondern alle Gewebematerialteile erfasst oder abnimmt, die zur Abnahmeposition A gefördert werden.

Die Vorrichtung zur Abnahme des Restgewebes kann als Aufrollmechanismus ausgebildet sein, der unter das Gewebeband fährt und das Restgewebe nach oben wegführt und/oder falls erforderlich aufwickelt.

Eine Greifvorrichtung oder Abnehmvorrichtung kann folgende alternative und/oder zusätzliche Vorrichtungen aufweisen: basierend auf elektrostatischer Adhäsion, Gefriergreifer, Klebegreifer, ggf. Klettverschlussgreifer, forkenartiger Greifer.

Der eine oder die mehreren Linearträger sind an einem Traggestell angeordne1.

Das Traggestell kann an die Förderrichtung heranbewegt werden bzw. von dieser entfernt werden, so dass bei Materialen, die keine automatische Abnahme erfordern, das Traggestell und die Linearträger mit den Abnahmemodulen von der Förderrichtung separiert werden können.

Vorzugsweise ist das Abnahmemodul an einem Rollschlitten befestigt, der entlang des Linearträgers bewegbar ist.

Die Aufgabe wird auch durch ein Verfahren zum Greifen und Bewegen eines Gewebematerialteils gelöst, das auf einer Fördereinrichtung aufliegt, umfassend die Schritte: Bewegen wenigstens eines geschnittenen Gewebematerialteils auf einer Fördereinrichtung bis zu einer Abnahmeposition; Greifen des wenigstens einen geschnittenen Gewebematerialteils mittels einer Greifvorrichtung, Transportieren des gegriffenen Gewebematerialteils mittels eines Abnahmemoduls in Förderrichtung entlang eines sich in Förderrichtung erstreckenden Linearträgers zu einer Ablageposition, Freigeben des gegriffenen Gewebematerialteils an der Ablageposition.

Weiter wird ein System zum Schneiden und Abtransportieren von geschnittenen Gewebematerialteils angegeben, umfassend: eine Schneidvorrichtung zum Schneiden wenigstens eines Gewebematerialteils, eine Fördereinrichtung, auf der das Gewebematerial gefördert und geschnitten wird, eine Abnahmevorrichtung wie oben beschreiben.

Im Folgenden wird mit Bezug auf die Figuren Ausgestaltungen der Erfindung näher erläutert Die Erfindung ist in den Ansprüchen definiert.

Es zeigen:
Figur 1 eine perspektivische Darstellung einer erfindungsgemäßen Anlage;

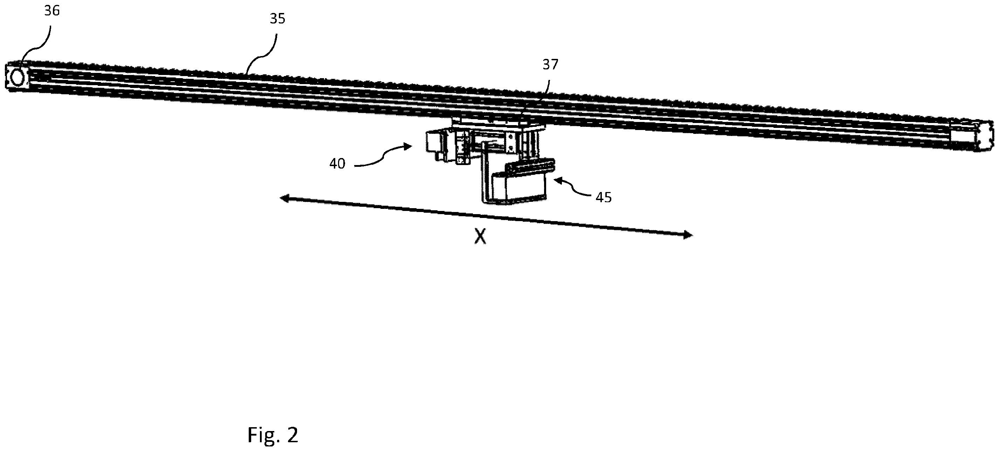

Figur 2 einen Linearträger mit Abnahmemodul gemäß der vorliegenden Erfindung;

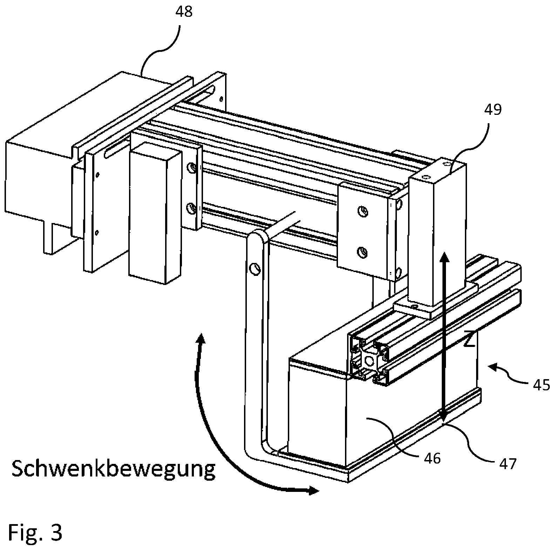

Figur 3 eine perspektivische Darstellung eines erfindungsgemäßen Abnahmemoduls;

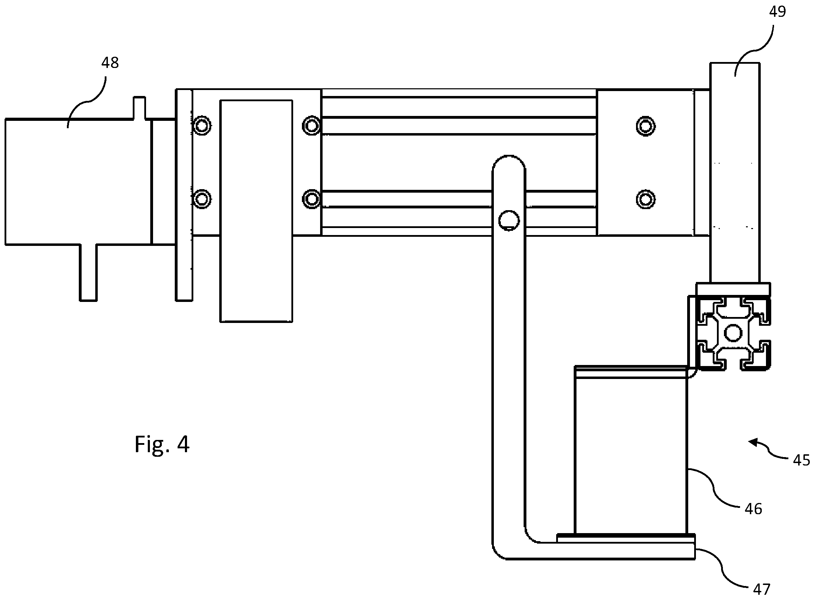

Figur 4 eine Seitenansicht eines erfindungsgemäßen Abnahmemoduls; und
Figur 5 zeigt ein Flussablaufdiagramm des Verfahrens zum automatischen Abnehmen von Gewebematerialteilen.
Figur 6 zeigt ein weiteres Flussablaufdiagramm eines alternativen Verfahrens.
Figur 7 eine perspektivische Darstellung einer weiteren Ausgestaltung einer erfindungsgemäßen Anlage;

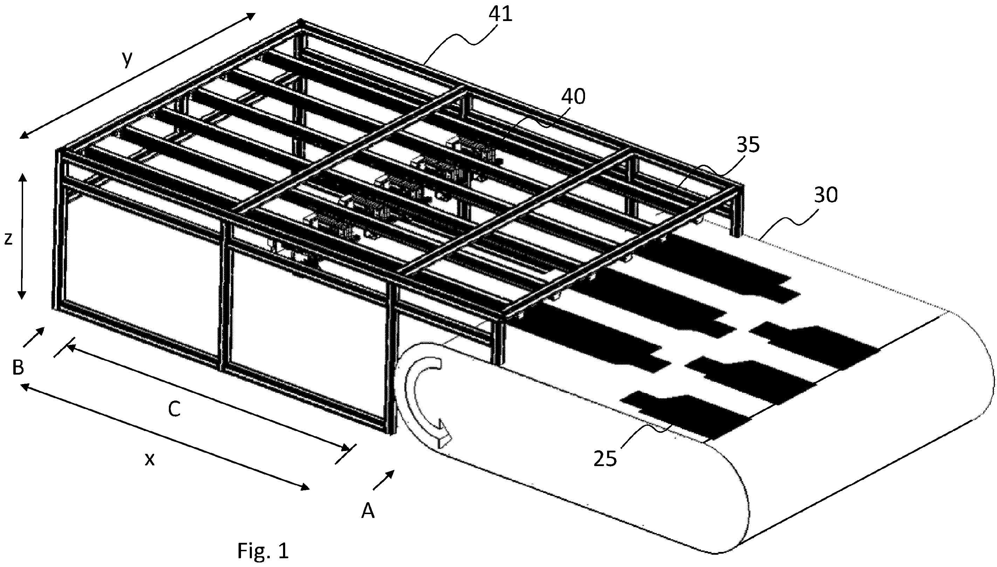

In Figur 1 ist eine erfindungsgemäße Anlage dargestellt. Die Anlage umfasst eine Fördereinrichtung 30, auf der Gewebematerialteile 25 transportiert werden. Um die Erfindung einfach darzustellen, sind hier bereits geschnittene Gewebematerialteile 25 auf der Fördereinrichtung 30 dargestellt, die zueinander versetzt in mehreren Spuren angeordnet sind und in Förderrichtung x gefördert werden. Vor (in Förderrichtung) dieser Fördereinrichtung oder über dieser Fördereinrichtung ist eine Schneidvorrichtung (nicht dargestellt) angeordnet, die zum Schneiden einer breiten Bahn eines Gewebes angeordnet ist und die Gewebematerialteile 25 mit vorzugsweise maximaler Ausbeutung der Gewebefläche schneidet. Am Ende der Fördereinrichtung 30 ist ein Traggestell 41 angeordnet, an dem mehrere Linearträger 35 angeordnet sind, die sich in Längsrichtung erstrecken. An jedem Linearträger 35 ist ein Abnahmemodul 40 befestigt, welches in Förderrichtung x beweglich ist.

In einer einfachsten Ausgestaltung wird auf der Fördereinrichtung 30 ein Gewebematerialteil 25 einspurig geschnitten und es ist nur ein Linearträger 35 mit einem Abnahmemodul 40 vorhanden.

Die Erfindung sieht nun vor, dass das Abnehmen eines zugeschnittenen Gewebematerialteils 25 in drei Stufen erfolgt. Zuerst wird das Gewebematerialteil 25 gegriffen oder angesaugt bzw. von der Fördereinrichtung 30 angehoben, dann wird es mechanisch von einer Greifeinrichtung 45 eingeklemmt. Zuletzt wird das eingeklemmte Gewebematerialteil 25 mittels einer Linearbewegung des Abnahmemoduls 40 entlang des Linearträgers 35 in Förderrichtung zu einer Ablageposition B abtransportiert und abgelegt. Nach erfolgtem Ablegen des Gewebematerialteils 25 fährt das Abnahmemodul 40 zurück zur Abnahmeposition A im Bereich der Fördereinrichtung 30, um das nächste Gewebematerialteil 25 abzunehmen.

Die Greifvorrichtung 45 kann dabei verschiedenartig ausgebildet sein. Abhängig von der Oberfläche der Fördereinrichtung 30 kann die Greifvorrichtung 45 beispielsweise eine Saugvorrichtung 46 und/oder eine Klemmvorrichtung 47 umfassen. Eine derartige Greifvorrichtung 45 ist insbesondere bei ebenen bzw. glatten Oberflächen der Fördereinrichtung eignet. Dazu wird die Saugvorrichtung 46 im Bereich der Abnahmeposition A auf das Gewebematerialteil 25 abgesenkt und saugt das Gewebematerialteil 25 an. Dazu ist vorzugsweise vorgesehen, dass das Ansaugen bzw. Einklemmen oder Greifen im vorderen Bereich des geschnittenen Gewebematerialteils 25 erfolgt. Dann wird das Gewebematerialteil 25 mit dieser Saugvorrichtung 46 durch eine vertikale Bewegung in z-Richtung nach oben angehoben, so dass das Klemmelement 47 unter das angehobene Gewebematerialteil 25 fahren kann oder bewegt werden kann. Das Klemmelement 47 bewegt sich dann in Richtung der Saugvorrichtung 46 und klemmt somit das geschnittene Gewebematerialteil 25, welches an der Saugvorrichtung 46 hängt, von unten ein. Dies ist daher notwendig, da das Gewebematerialteil 25 aus biegeschlaffem Material besteht und eine Saugvorrichtung 46 beim Ansaugen das Gewebe nur kurzzeitig zuverlässig anheben kann, da sich durch Faltenbildung der Saugeffekt verringert und ggf. zum Abfallen des angehobenen Gewebematerialteils 25 führt. Durch Untergreifen des Klemmelements 47 und Einklemmen des Gewebematerialteils 25 zwischen Saugvorrichtung 46 und Klemmelement 47 wird ein Abfallen verhindert. Sollte das Material des Gewebematerialteils 25 eben und glatt sein und/oder das Gewebematerialteil 25 geringe Abmessungen aufweisen und/oder die Saugkraft der Saugvorrichtung groß genug sein, kann das Klemmelement 47 auch entfallen, da dann die Saugvorrichtung 46 einen ausreichenden Unterdruck aufbauen kann, um einen sicheren Transport des Gewebematerialteils 25 zur Ablageposition zu gewährleisten.

Nachdem die Saugvorrichtung 46 und/oder das Klemmelement 47 mit dem eingeklemmten Gewebematerialteil 25 vertikal nach oben gefahren wurden, kann das Abnahmemodul 40 am Linearträger 35 entlang der Förderrichtung x zur Ablageposition B gefahren werden. Dazu kann die Greifvorrichtung 45 bzw. das Abnahmemodul 40 im Transportbereich C an einer höheren Position befindlich sein als während der Abnahme an der Abnahmeposition A.

Im Bereich der Ablageposition B wird das Klemmelement 47 von der Unterseite der Saugvorrichtung 46 mit dem eingeklemmten Gewebe entfernt, beispielsweise durch eine Schwenk- oder Schiebebewegung, so dass das Gewebematerialteil 25 abfallen kann. Darüber hinaus oder falls kein Klemmelement 47 vorhanden ist, kann auch ein noch anhaltender Saugeffekt, der optional noch vorhanden sein kann, abgeschaltet werden, so dass das Gewebematerialteil 25 mit hoher Genauigkeit wiederholbar an einem Ablageposition B abgelegt werden kann. Zum Ablegen kann vorgesehen sein, dass die Greifvorrichtung 45 abgesenkt wird, um ein präziseres Ablegen zu ermöglich.

In der einfachsten Ausgestaltung fährt das Abnahmemodul 40 nun am Linearträger 35 zurück zur Abnahmeposition A, um das nächste Gewebematerialteil 25 aufzunehmen.

In einer weiteren Ausgestaltung ist es möglich, dass der Linearträger 35 für die Bewegung von der Ablageposition B zurück zur Abnahmeposition A quer zur Förderrichtung, d. h. in Y-Richtung, versetzt wird.

Dies ist insbesondere dann notwendig, wenn wenigstens zwei Linearträger 35 nebeneinander angeordnet sind, die abwechselnd arbeiten. Um ein Interferieren eines abzutransportierenden Gewebematerialteils 25 mit einem zurückfahrenden Abnahmemodul 40 zu verhindern, wird der Linearträger 35 des zurückfahrenden Abnahmemoduls 40 mittels Stellmotoren an einem Querträger des Traggestells 41 um einen voreingestellten Abstandswert in Y-Richtung versetzt.

Nachdem dieser Linearträger 35 versetzt wurde, bleibt er für den nächsten Transportvorgang entweder in dieser versetzten Position, wenn das abzutransportierende nächste Gewebematerialteil 25 in dieser Spur ankommt. Alternativ ist es möglich, dass der Linearträger 35 an der Abnahmeposition A wieder an seine ursprüngliche Y-Position zurückfährt und analog dazu das andere dann bereits an der Ablageposition B befindliche Abnahmemodul 40 mit dem dazugehörigen Linearträger 35 in eine andere Y-Position quer zur Förderrichtung versetzt wird.

In einer alternativen Ausgestaltung kann die Fördereinrichtung 30 eine gerillte Struktur aufweisen, die ein Untergreifen einer forken- oder gabelähnlichen Greifeinrichtung 45 ermöglicht. Bei einer derartigen Ausgestaltung der Fördereinrichtung 30 ist eine Saugvorrichtung 46 nicht erforderlich. Hier reicht es vielmehr aus, mit forken- oder zinkenähnlichen Vorrichtungen unter das Gewebematerial 25 zu greifen und mit einem Gegenstück das abzutransportierende Gewebematerialteil 25 festzuklemmen.

Analog zur obigen Ausführung ist es bei glatten und dichten Materialien möglich, auf ein Klemmen zu verzichten und stattdessen eine Saugvorrichtung 46 einzusetzen. D.h. die forken- oder gabelähnliche Greifeinrichtung 45 hebt das oder die mehreren Gewebemateriale 25 an und die eine oder mehreren Saugvorrichtungen 46 saugen das eine oder die mehreren Gewebemateriale 25 an und halten diese auch während des Transports zur Ablageposition B.

Ein vertikales Anheben des Gewebematerialteils 25 ist grundsätzlich nicht zwingend erforderlich. Es erleichtert jedoch den Abtransport und/oder ein beschädigungsfreies Ablegen des geschnittenen Gewebematerialteils 25, da das Gewebematerialteil 25 dann nicht weiter über die sich bewegende Fördereinrichtung gezogen wird. Ein Anheben ist dann vorteilhaft, wenn die Größe des Gewebematerialteils 25 ein Anheben erfordert, um ein Schleifen über die sich bewegende Fördereinrichtung, den Boden oder andere Bauteile zu verhindern. Das Anheben ist auch deshalb vorteilhaft, da der Abnahmevorgang besser erkannt werden kann und/oder um ein Klemmen mittels einer Klemmvorrichtung von unten zu ermöglichen.

In einer weiteren alternativen Ausgestaltung ist es möglich, das Abnahmemodul 40 mit einer Sensorik auszustatten, bspw. als Zugwiderstandssensor bzw. einem optischen Sensor oder einer Kamera, mit denen jeweils festgestellt werden kann, ob das Gewebematerialteil 25 vollständig aus der Gewebebahn herausgeschnitten wurde. Wenn mittels der optischer Erkennung eine verbleibende Verbindung zwischen Restgewebe und Gewebematerialteil erkannt wird, kann der das Abnehmen unterbrochen werden und ein Signal an die Steuerung der Anlage ausgegeben werden, um ggf. die Fördereinrichtung 30 zu stoppen und/oder ein Nachschneiden zu ermöglichen.

Bei einem Zugwiderstandssensor wird durch eine Bewegung des Abnahmemoduls 40 nach dem Abnehmen oder Greifen bzw. Klemmen des Gewebematerialteils 25 mit einer vorbestimmten Geschwindigkeit, die höher ist als die Fördergeschwindigkeit der Fördereinrichtung 30 ist, festgestellt, ob ein Widerstand beim Abnehmen besteht. Sollte das Gewebematerialteil nicht vollständig abgetrennt sein, bspw. wenn der festgestellte Widerstand beim Wegtransportieren größer ist als ein vorbestimmter Wert, wird das Wegziehen unterbrochen und ein Signal an die Steuerung der Anlage ausgegeben, um ggf. die Fördereinrichtung 30 zu stoppen und/oder ein Nachschneiden zu ermöglichen. Das Nachschneiden kann dabei entweder per Hand vom Anlagenpersonal vorgenommen werden bzw. auch automatisch mittels einer optisch gesteuerten Laserschneidvorrichtung. Ebenso können Schneidparameter der Schneidemaschine durch die Rückkopplung geändert werden, um bei den folgenden Teilen ein vollständiges Durchtrennen oder -schneiden sicherzustellen.

Die Saugvorrichtung 46 kann verschieden viele Saugnäpfe bzw. Saugelemente aufweisen, um auf verschiedene Breiten von Gewebematerialteilen 25 angepasst zu werden. Wie bereits oben dargestellt, muss die Abnahmevorrichtung in der Lage sein, verschieden große Gewebematerialteile 25 abzutransportieren. Daher ist es erforderlich, die "Greif"-Breite der Greifvorrichtung 45 an das zu greifende Gewebematerialteil 25 anzupassen.

Daher weist die Saugvorrichtung 46 mehrere und/oder verschieden große Segmente auf, in denen separat ein Saugeffekt durch Aufbau eines Unterdrucks erzeugt werden kann, um somit verschiedene Größen eines Gewebematerialteils 25 bzw. auch an mehreren Stellen anzusaugen.

Da das Klemmelement 47 üblicherweise erst zum Einsatz kommt, nachdem das Gewebematerialteil 25 angehoben wurde, ist die Größe des Klemmelements 47 weitestgehend unabhängig von der Breite des abzutransportierenden Gewebematerialteils 25.

Im dargestellten Beispiel von Figur 1 sind sechs parallel angeordnete Linearträger 35 vorhanden, an denen jeweils ein Abnahmemodul 40 angeordnet ist, welche sich jeweils in Richtung Ablageposition B bewegen können. Auf der Fördereinrichtung 30 werden, wie in Figur 1 dargestellt, jeweils parallel drei geschnittene Gewebematerialteile 25 zur Verfügung gestellt. D. h. bei dem dargestellten Beispiel greifen drei Abnahmemodule 40 im wesentlichen zeitgleich jeweils ein Gewebematerialteil 25 und können diese dann in Richtung Ablageposition B abtransportieren. Da die nächsten drei Gewebematerialteile 25 jeweils an einer versetzten Y-Position zu den drei vorherigen Gewebematerialteilen 25 ankommen, werden die nächsten drei Gewebematerialteile 25 von den anderen drei Linearträgern und den daran montierten Abnahmemodulen gegriffen und abtransportiert.

Alternativ könnten aber auch die drei bereits verwendeten Linearträger 35 mit den jeweiligen Abnahmemodulen 40 an die Abnahmeposition A der nächsten Gewebematerialteile 25 gefahren werden. Daher sind vorzugsweise alle Linearträger 35 zueinander in Y-Richtung im Traggestell 41 verfahrbar.

Das Abnahmemodul 40 weist neben der Saugvorrichtung 46 und dem Klemmelement 47 eine Ventilsteuerung 48 auf, um die verschiedenen Saugsegmente der Saugvorrichtung 46 zu aktivieren. Weiter wird mittels der Ventilsteuerung 48 mittels eines Pneumatikzylinders 49 eine Bewegung der Greifvorrichtung 45 in Z-Richtung gesteuert. Ebenso wird mittels eines nicht näher dargestellten Pneumatikzylinders das Klemmelement 47 aktiviert, um unter die Saugvorrichtung 46 zu fahren und das Gewebematerialteil 25 einzuklemmen.

Der Linearträger 35 weist einen Motor 36 auf, der einen Antrieb für das Abnahmemodul 40 bereitstellt. Vorzugsweise ist das Abnahmemodul 40 an einem Rollschlitten 37 befestigt, der vorzugsweise über einen Zahnriemen vom Motor 36 entlang des Linearträgers 35 bewegt wird. Die Positionierung des Abnahmemoduls 40 wird über Positionssensoren gesteuert.

Die Saugvorrichtung 46 ist in vertikaler Richtung (Z-Richtung) verfahrbar, um somit den Stoff von der Oberfläche der Fördereinrichtung anzusaugen und in Z-Richtung anzuheben, wobei bei einer vorbestimmten Anhebeposition das Klemmelement 47 das mittels Unterdruck angesaugte Gewebematerialteil 25 von unten zwischen Saugvorrichtung 46 und Klemmelement 47 einklemmen kann um somit ein sicheres Greifen zu ermöglichen und ein Herausfallen des Gewebematerialteils 25 aus der Greifvorrichtung 45 zu verhindern.

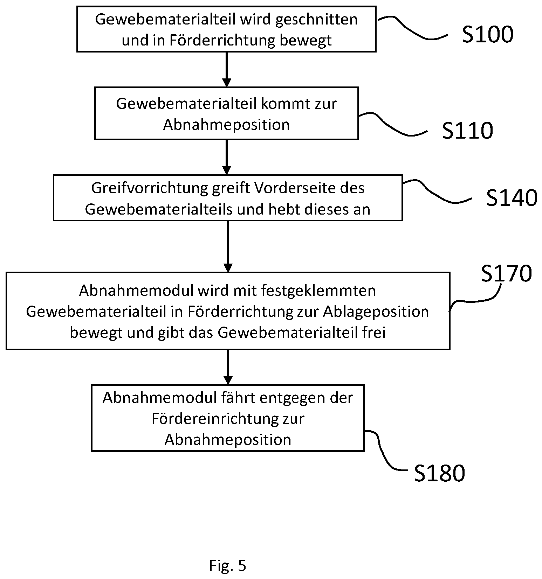

In Figur 5 ist ein Ablauf eines grundlegenden Verfahrens gemäß der vorliegenden Erfindung dargestellt. In Schritt 100 wird das Gewebematerialteil 25 geschnitten und auf der Fördereinrichtung bewegt bis es zur Abnahmeposition A kommt S110. Dann greift die Greifvorrichtung 45 die Vorderseite des Gewebematerialteils 25 und hebt dieses an S140. Dann wird das Abnahmemodul 40 in Schritt S170 zur Ablageposition B bewegt, wo das Gewebematerialteil 25 frei gegeben und abgelegt wird. Danach fährt das Abnahmemodul 40 in Schritt S180 zurück zur Abnahmeposition A, um ein weiteres Gewebematerialteils 25 aufzunehmen.

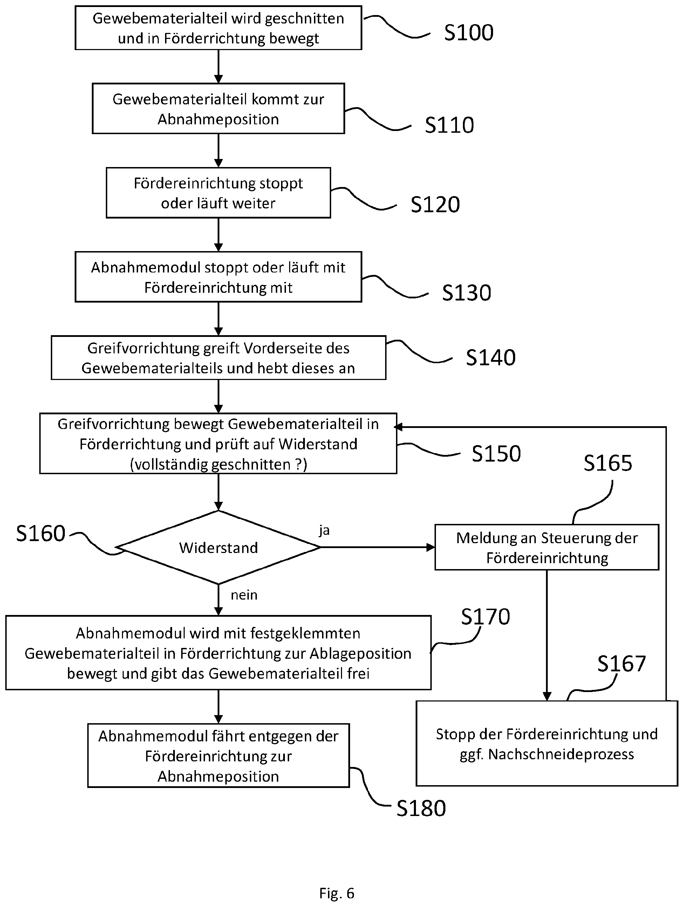

Fig. 6 zeigt den Ablauf des erfindungsgemäßen Verfahrens mit weiteren Details. Auch hier wird in Schritt 100 das Gewebematerialteil 25 geschnitten und auf der Fördereinrichtung bewegt, bis es zur Abnahmeposition A kommt S110. Dabei ist die Abnahme sowohl bei laufendem als auch bei gestopptem Förderband möglich S120. Wenn das Förderband gestoppt ist, kann das Abnahmemodul 40 das Gewebematerialteil 25 ohne Bewegung in X-Richtung aufnehmen. Wenn das Förderband läuft, bewegt sich das Abnahmemodul 40 in X-Richtung, um das Gewebematerialteil 25 in der Bewegung aufzunehmen S130. Nachdem das Abnahmemodul 40 die richtige Position für die Abnahme eingenommen hat, greift S140 es die Vorderseite des Gewebematerialteils 25 und hebt diese ggf. an. Ein Anheben ist dabei optional und abhängig u.a. von der Größe und vom Material des Gewebematerialteils 25. Bei Einsatz einer Saugvorrichtung 46 wird nach dem Anheben das Klemmelement 47 unter das Gewebematerialteil 25 bewegt, um dieses festzuklemmen. Dann wird im Schritt S150 geprüft, ob der Zugwiderstand oder ein anderer durch eine Sensorik ermittelter Wert für das Durchschneiden größer als ein vorbestimmter Wert ist. Ist dieser von der Sensorik ermittelte Wert größer als ein vorbestimmter Wert, wird dies der Steuerung der Anlage mitgeteilt S165, die dann ggf. die Anlage stoppt S167.

Ist das Gewebematerialteil ganz ausgeschnitten S160, wird das Abnahmemodul 40 in Schritt S170 zur Ablageposition B bewegt, wo das Gewebematerialteil 25 frei gegeben und abgelegt wird. Danach fährt das Abnahmemodul 40 in Schritt S180 zurück zur Abnahmeposition A, um ein weiteres Gewebematerialteils 25 aufzunehmen.

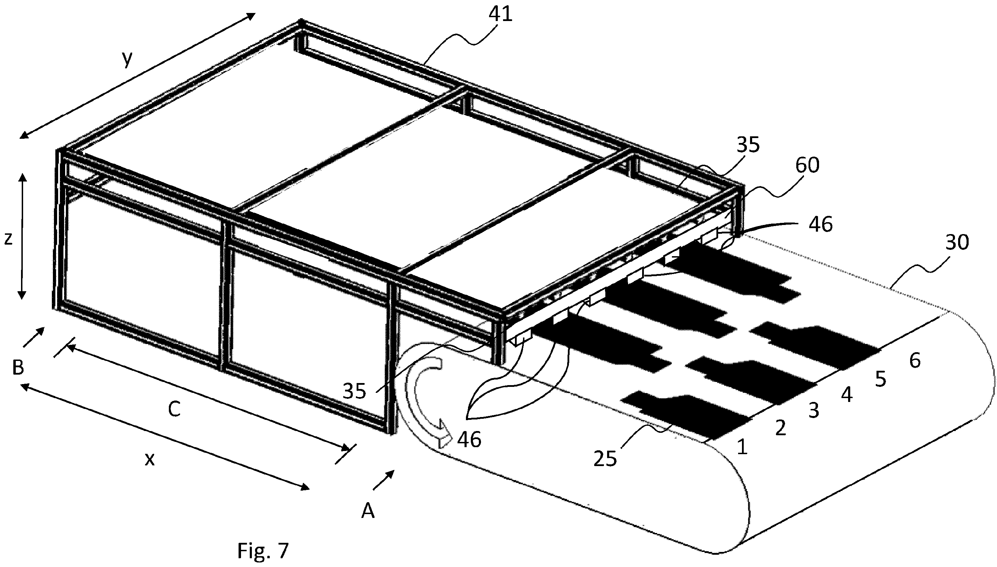

In einer weiteren Ausgestaltung gemäß Figur 7, die mit den oben beschriebenen Ausgestaltungen ganz oder teilweise kombiniert werden kann, weist das Traggestell 41 wenigstens zwei Linearträger 35 auf, die vorzugsweise an den Außenseiten der Fördereinrichtung 30 angeordnet sind. Zusätzlich können auch noch ein oder mehrere mittlere Linearträger 35 vorhanden sein.

Bei dieser Ausgestaltung ist an den wenigstens zwei parallelen Linearträgern 35 nur ein gemeinsames Abnahmemodul 60 angeordnet, welches zwischen der Abnahmeposition A und der Ablageposition B verfahrbar ist. Dieses Abnahmemodul 60 weist mehrere Vorrichtungen 46 auf, die zum gleichzeitigen Anheben von einem oder mehreren Gewebematerialteilen 25 vorgesehen sind. In einer bevorzugten Variante sind die Vorrichtungen 46 als Saugvorrichtungen 46 ausgebildet, die sich alle gleichzeitig oder selektiv ansteuern lassen, um somit an allen Saugvorrichtungen 46 gleichzeitig oder selektiv einen Unterdruck aufzubauen und das eine oder die mehreren Gewebematerialteile 25 gleichzeitig anzusaugen. D.h. in dieser Ausgestaltung werden das eine oder die mehreren Gewebematerialteile 25 gleichzeitig angehoben, insbesondere angesaugt, und falls erforderlich von einer gemeinsamen oder mehreren einzelnen Klemmvorrichtungen 47 eingeklemmt. Je nach Größe und/oder Material der Gewebematerialteile 25 kann ein Klemmen entfallen. Diese Ausgestaltung ist insbesondere dann vorteilhaft, wenn die Fördergeschwindigkeit der Fördereinrichtung 30 langsamer ist als die Transportgeschwindigkeit der Abnahmevorrichtung. Insbesondere bei großen Gewebematerialteilen 25 ist ausreichend Zeit vorhanden, um das oder die aufgenommenen Gewebematerialteile 25 zur Ablageposition B zu fahren und an die Abnahmeposition A zurück zu fahren, bis die nächsten ausgeschnittenen Gewebematerialteile 25 zur Abnahme bereit sind. Eine Steuerung der Anlage kann jeweils eine oder mehrere Vorrichtungen 46 zum gleichzeitigen Anheben der Gewebematerialteile 25 ansteuern, die jeweils den Schnittbahnen der Fördereinrichtung 30 zugeordnet sind, in denen Gewebematerialteile 25 ankommen, die abtransportiert werden sollen.

Ein einer nicht dargestellten Variante kann das gemeinsame Abnahmemodul 60 eine gemeinsame Saugvorrichtung aufweisen. Diese erstreckt sich vorzugsweise über die gesamte Breite der Gewebebahn. Somit lassen sich alle ankommenden Gewebematerialteile ansaugen, ggf. anheben und abtransportieren.

In einer bevorzugten Ausgestaltung ist ein Anheben der Gewebematerialteile nicht erforderlich und die Abnehmvorrichtung, vorzugswiese die Saugvorrichtung, saugt das oder die Gewebematerialteile auf der Förderebene an und transportiert diese in Förderrichtung zur Ablageposition B.

In einer weiteren nicht dargestellten Ausgestaltung ist über der Förderrichtung eine stationäre Anhebevorrichtung vorhanden, die das oder die ankommenden Gewebematerialteile vertikal anhebt und von der Fördereinrichtung oder Förderebene anhebt und festhält. Das oder die Abnahmemodule der Abnahmevorrichtung können dann mittels einer Greif oder Klemmvorrichtung das oder die angehobenen Gewebematerialteile erfassen, festklemmen und abtransportieren.

Dies hat den Vorteil, dass die Anhebevorrichtung, die vorzugsweise als Saugvorrichtung ausgebildet ist, nicht beweglich ist und somit der Aufwand zur Zufuhr des Unterdrucks reduziert ist. D.h. die die Abnahmemodule der Abnahmevorrichtung weisen nur eine Greif oder Klemmvorrichtung auf, die Gewebematerialteile mechanisch erfassen und abtransportieren.

Außerdem kann dann das eine gemeinsame Abnahmemodul oder die mehreren Abnahmemodule den Transport der Gewebematerialteile übernehmen und die stationäre Anhebevorrichtung kann die nächsten ankommenden Gewebematerialteile anheben und für die Übergabe an das oder die Abnahmemodule bereithalten. Dadurch ist der Anhebevorgang vom Transportvorgang entkoppelt und kann somit zeitlich unabhängig erfolgen. Dies ist insbesondere für einen kontinuierlichen Schneid und/oder Förderprozess vorteilhaft.

Wie in Figur 1 und 7 dargestellt, werden die Gewebematerialteile 25 in mehreren Bahnen geschnitten und gefördert. So werden in Figur 7 jeweils die Anhebevorrichtungen 46 in den Bahnen 2, 4 und 6 angesteuert, um die Gewebematerialteile 25 in diesen Bahnen anzuheben bzw. anzusaugen. Eine nicht dargestellte Klemmvorrichtung klemmt dann, wie bei der Ausgestaltung gemäß Figur 1 beschrieben, die angehobenen bzw. angesaugten Gewebematerialteile 25 ein, so dass diese sicher zur Ablageposition B transportiert werden können.

Die erfindungsgemäße Abnahmevorrichtung bzw. das Verfahren werden vorzugsweise bei der Herstellung von OPW-Airbags eingesetzt, die mittels Laserschneidanlagen geschnitten werden. Diese Airbags weisen meist große Dimensionen auf, insbesondere für Seiten-Airbags von PKWs, die von der A zur C Säule reichen. Daher ist die Abnahme in Förderrichtung und insbesondere die Abnahme an deren Vorderseite sehr wichtig. Darüber hinaus ist in diesem Bereich eine sehr hohe Sorgfalt erforderlich, um das Gewebe der Airbags nicht zu beschädigen.

Mit dem erfindungsgemäßen Verfahren zum Abnehmen von Gewebematerialteilen 25 und der Anlage umfassend eine Fördereinrichtung und eine Abnahmevorrichtung ist es möglich, eine effiziente automatisierte Abnahme von Gewebematerialteilen 25 zu ermöglichen, die einerseits ein geringen gerätetechnischen Aufwand erfordert, ein monotones manuelles Abnehmen durch Personen erübrigt und eine flexible Anpassung an verschiedene Gewebe als auch an verschiedene Größen der Gewebematerialteile 25 ermöglicht.

## Patentansprüche

1. System umfassend:
eine Fördereinrichtung (30), und
eine Abnahmevorrichtung zum Abnehmen und Bewegen wenigstens eines Gewebematerialteils (25), der auf der Fördereinrichtung (30) aufliegt und gefördert wird,
wobei die Abnahmevorrichtung weiter umfasst:
wenigstens ein der Fördereinrichtung (30) zugeordneter sich in Förderrichtung erstreckender Linearträger (35),
wenigstens ein am Linearträger (35) befestigtes Abnahmemodul (40), das entlang des Linearträgers (35) jeweils in der gleichen Ebene in Förderrichtung und entgegengesetzt zur Förderrichtung bewegbar ist,
wobei das Abnahmemodul (40) eine Abnehmvorrichtung (45) aufweist, die zum Abnehmen wenigstens eines der Gewebematerialteile (25) eingerichtet ist, wobei das Abnahmemodul (40) eingerichtet ist, das Gewebematerialteil (25) von einer Abnahmeposition (A) zu einer Ablageposition (B) zu bewegen,
wobei die Abnehmvorrichtung (45) ein oder mehrere Gewebematerialteile (25) erfasst und in vertikaler Richtung von der Fördereinrichtung (30) aufnimmt und anhebt,
**dadurch gekennzeichnet, dass**
die Abnahmevorrichtung in Förderrichtung hinter der Fördereinrichtung (30) angeordnet ist,
die Abnahmevorrichtung bezüglich ihrer Position zur Fördereinrichtung (30) verstell- oder bewegbar ist, und
der wenigstens eine Linearträger (35) an einem Traggestell (41) befestigt ist, wobei das Traggestell (41) auf dem Boden aufsteht und die Fördereinrichtung (30) wenigstens teilweise überlappt.

2. System nach Anspruch 1, wobei die Abnehmvorrichtung (45) eine Klemmvorrichtung (47) enthält, die das eine oder die mehreren Gewebematerialteile (25) von einer Oberseite und/oder von einer Unterseite des Gewebematerialteils (25) einklemmt und/oder die Abnehmvorrichtung (45) wenigstens eine Saugvorrichtung (46) aufweist, die das Gewebematerialteil (25) von einer Oberseite des Gewebematerialteils (25) ansaugt.

3. System nach Anspruch 2, wobei ein Klemmelement (47) das Gewebematerialteil (25) von einer Unterseite des Gewebematerialteils (25) gegen die Saugvorrichtung (46) presst.

4. System nach einem der vorhergehenden Ansprüche, wobei der Linearträger (35) und/oder das Abnahmemodul (40) quer zur Förderrichtung verstellbar ist/sind.

5. System nach einem der vorhergehenden Ansprüche, wobei sich die Abnehmvorrichtung (45) an einer Abnahmeposition (A) des Gewebematerialteils (25) tiefer befindet als während einer Bewegung innerhalb eines Transportbereich (C) des Gewebematerialteils (25) und/oder wobei das Abnahmemodul (40) das Gewebematerialteil (25) nach einem Abnehmvorgang in Förderrichtung bewegt und die Abnehmvorrichtung (45) das Gewebematerialteil (25) an Ablageposition (B) freigibt.

6. System nach einem der vorhergehenden Ansprüche, wobei der Linearträger (35) nach einem Abnehmvorgang quer zur Förderrichtung verstellbar ist und/oder sich das Abnahmemodul (40) während einer Bewegung von der Ablageposition (B) zur Abnahmeposition (A) um einen vorbestimmten Abstand quer zur Förderrichtung versetzt zur Bewegung von der Abnahmeposition (A) zur Ablageposition (B) bewegt.

7. System nach einem der vorhergehenden Ansprüche, wobei das Gewebematerialteil (25) an seiner Frontseite gegriffen und vorzugsweise angehoben wird.

8. System nach einem der vorhergehenden Ansprüche, wobei das Abnahmemodul (40) eine Sensorik aufweist, um festzustellen, ob das Gewebematerialteil (25) frei geschnitten ist und, wenn das Gewebematerialteil (25) nicht frei geschnitten ist, ein Steuersignal an die Fördereinrichtung (30) ausgebbar ist.

9. System nach einem der vorhergehenden Ansprüche, wobei eine gemeinsame Saugvorrichtung (46) oder mehrere Saugvorrichtungen (46) vorhanden sind, die vorzugsweise selektiv ansteuerbar sind.

10. System nach einem der vorhergehenden Ansprüche, weiter umfassend mehrere Linearträger (35) mit jeweils einem Abnahmemodul (40) oder wenigstens zwei Linearträger an dem ein gemeinsames Abnahmemodul (40) angeordnet ist, welches mehrere Gewebematerialteile (25) gleichzeitig und oder selektiv abnehmen kann.

11. System nach einem der vorhergehenden Ansprüche, weiter umfassend eine Anhebevorrichtung, die stationär über der Fördereinrichtung (30) angeordnet ist, um ein oder mehrere Gewebematerialteile (25) gleichzeitig und/oder selektiv vorzugsweise an ihrer Vorderseite anzuheben.

12. System nach Anspruch 11, wobei ein oder mehrere Abnahmemodule (40, 60) der Abnahmevorrichtung ein oder mehrere Gewebematerialteile (25), die von der Anhebevorrichtung wenigstens teilweise von der Förderebene angehoben wurden, erfassen und in Förderrichtung zur Ablageposition (B) transportieren.

13. Verfahren zum Abnehmen und Bewegen wenigstens eines Gewebematerialteils (25), der auf einer Fördereinrichtung (30) aufliegt und gefördert wird, umfassend die Schritte:
Bewegen wenigstens eines geschnittenen Gewebematerialteils auf einer Fördereinrichtung (30) bis zu einer Abnahmeposition (A);
Abnehmen des wenigstens einen geschnittenen Gewebematerialteils (25) mittels einer Abnehmvorrichtung (45) von der Förderebene, wobei die Abnehmvorrichtung (45) den Gewebematerialteil (25) erfasst und in vertikaler Richtung von der Fördereinrichtung (30) aufnimmt und anhebt,
Transportieren des abgenommenen Gewebematerialteils (25) mittels eines die Abnehmvorrichtung (45) aufweisenden Abnahmemoduls (40) zu einer Ablageposition (B), wobei das Abnahmemodul (40) an einem Linearträger (35) befestigt ist, und wobei sich das Abnahmemodul (40) entlang des sich in Förderrichtung erstreckenden Linearträgers (35) jeweils in der gleichen Ebene in Förderrichtung und entgegengesetzt zur Förderrichtung bewegt,
Freigeben des gegriffenen Gewebematerialteils (25) an der Ablageposition (B),
**gekennzeichnet durch**
eine den Linearträger (35) und das Abnahmemodul (40) umfassende Abnahmevorrichtung,
wobei
die Abnahmevorrichtung in Förderrichtung hinter der Fördereinrichtung (30) angeordnet ist,
die Abnahmevorrichtung bezüglich ihrer Position zur Fördereinrichtung (30) verstell- oder bewegbar ist, und Linearträger (35) an einem Traggestell (41) befestigt ist, wobei das Traggestell (41) auf dem Boden aufsteht und die Fördereinrichtung (30) wenigstens teilweise überlappt.

14. System zum Schneiden und Abtransportieren von geschnittenen Gewebematerialteilen (25), umfassend:
eine Schneidvorrichtung zum Schneiden wenigstens eines Gewebematerialteils (25),
ein System nach einem der vorhergehenden Ansprüche 1-12.

## Claims

1. A system comprising:
a conveyor (30); and
a removal device for removing and moving at least one piece of fabric material (25) which rests on the conveyor (30) and is conveyed,
wherein the removal device further comprises:
at least one linear carrier (35) associated with the conveyor (30) and extending in the conveying direction;
at least one removal module (40) which is fastened to the linear carrier (35) and which can be moved along the linear carrier (35) in each case in the same plane in the conveying direction and counter to the conveying direction,
wherein the removal module (40) has a removal device (45) which is configured to remove at least one of the pieces of fabric material (25), wherein the removal module (40) is configured to move the piece of fabric material (25) from a removal position (A) to a depositing position (B),
wherein the removal device (45) grips one or more pieces of fabric material (25) and receives and lifts them in the vertical direction from the conveyor (30),
**characterized in that**
the removal device is arranged behind the conveyor (30) in the conveying direction,
the removal device can be adjusted or moved with respect to its position with respect to the conveyor (30), and
the at least one linear carrier (35) is fastened to a support frame (41), wherein the support frame (41) stands on the ground and at least partially overlaps the conveyor (30).

2. The system according to claim 1, wherein the removal device (45) contains a clamping device (47) which clamps the one or more pieces of fabric material (25) from an upper side and/or from a lower side of the piece of fabric material (25) and/or the removal device (45) has at least one suction device (46) which sucks the piece of fabric material (25) from an upper side of the piece of fabric material (25).

3. The system according to claim 2, wherein a clamping element (47) presses the piece of fabric material (25) from a lower side of the piece of fabric material (25) against the suction device (46).

4. The system according to any one of the preceding claims, wherein the linear carrier (35) and/or the removal module (40) is/are adjustable transversely to the conveying direction.

5. The system according to any one of the preceding claims, wherein the removal device (45) is located lower at a removal position (A) of the piece of fabric material (25) than during a movement within a transport region (C) of the piece of fabric material (25) and/or wherein the removal module (40) moves the piece of fabric material (25) in the conveying direction after a removal operation and the removal device (45) releases the piece of fabric material (25) at the depositing position (B).

6. The system according to any one of the preceding claims, wherein the linear carrier (35) is adjustable transversely to the conveying direction after a removal operation and/or the removal module (40) moves offset from the movement from the removal position (A) to the depositing position (B) by a predetermined distance transversely to the conveying direction during a movement from the depositing position (B) to the removal position (A).

7. The system according to any one of the preceding claims, wherein the piece of fabric material (25) is gripped and preferably raised at its front side.

8. The system according to any one of the preceding claims, wherein the removal module (40) has a sensor system in order to determine whether the piece of fabric material (25) is cut freely and, if the piece of fabric material (25) is not cut freely, a control signal can be output to the conveying device (30).

9. The system according to any one of the preceding claims, wherein a common suction device (46) or a plurality of suction devices (46) are present which are preferably selectively controllable.

10. The system according to any one of the preceding claims, further comprising a plurality of linear carriers (35) each having a removal module (40) or at least two linear carriers on which a common removal module (40) is arranged which can remove a plurality of pieces of fabric material (25) simultaneously and/or selectively.

11. The system according to any one of the preceding claims, further comprising a lifting device which is arranged in a stationary manner above the conveyor (30) in order to lift one or more pieces of fabric material (25) simultaneously and/or selectively, preferably at their front side.

12. The system according to claim 11, wherein one or more removal modules (40, 60) of the removal device grasp one or more pieces of fabric material (25) which have been lifted at least partially from the conveying plane by the lifting device and transport them to the depositing position (B) in the conveying direction.

13. A method for removing and moving at least one piece of fabric material (25) which rests on a conveyor (30) and is conveyed, comprising the steps of:
moving at least one cut piece of fabric material on a conveyor (30) up to a removal position (A);
removing the at least one cut piece of fabric material (25) from the conveying plane by means of a removal device (45), wherein the removal device (45) grips the piece of fabric material (25) and receives and lifts it in the vertical direction from the conveyor (30),
transporting the removed piece of fabric material (25) to a depositing position (B) by means of a removal module (40) having the removal device (45), wherein the removal module (40) is fastened to a linear carrier (35), and wherein the removal module (40) moves along the linear carrier (35) extending in the conveying direction in each case in the same plane in the conveying direction and counter to the conveying direction,
releasing the gripped piece of fabric material (25) at the depositing position (B),
**characterized by**
a removal device comprising the linear carrier (35) and the removal module (40),
wherein
the removal device is arranged behind the conveyor (30) in the conveying direction,
the removal device can be adjusted or moved with respect to its position with respect to the conveyor (30), and
the linear carrier (35) is fastened to a support frame (41), wherein the support frame (41) stands on the ground and at least partially overlaps the conveyor (30).

14. A system for cutting and transporting away cut fabric material parts (25), comprising:
a cutting device for cutting at least one piece of fabric material (25),
a system according to any one of the preceding claims 1-12.

## Revendications

1. Système comprenant :
un dispositif de convoyage (30), et
un dispositif de retrait pour retirer et déplacer au moins une partie de matière de tissu (25) qui repose et est acheminée sur le dispositif de convoyage (30),
dans lequel le dispositif de retrait comprend en outre :
au moins un support linéaire (35) s'étendant dans une direction de transport et associé au dispositif de convoyage (30),
au moins un module de retrait (40) fixé sur le support linéaire (35), qui peut être déplacé le long du support linéaire (35) dans le même plan dans la direction de transport et à l'opposé de la direction de transport, respectivement,
dans lequel le module de retrait (40) comporte un dispositif de retrait (45) qui est conçu pour retirer au moins une des parties de matière de tissu (25), dans lequel le module de retrait (40) est conçu pour déplacer la partie de matière de tissu (25) d'une position de retrait (A) à une position de dépose (B),
dans lequel le dispositif de retrait (45) détecte une ou plusieurs parties de matière de tissu (25) et les reçoit et soulève dans une direction verticale à partir du dispositif de convoyage (30),
**caractérisé en ce que**
le dispositif de retrait est agencé derrière le dispositif de convoyage (30) dans la direction de transport,
le dispositif de retrait est réglable ou mobile en ce qui concerne sa position par rapport au dispositif de convoyage (30), et
le au moins un support linéaire (35) est fixé sur un châssis de support (41), dans lequel le châssis de support (41) est en appui sur le sol et le dispositif de convoyage (30) le chevauche au moins partiellement.

2. Système selon la revendication 1, dans lequel le dispositif de retrait (45) contient un dispositif de serrage (47) qui serre la ou les parties de matière de tissu (25) à partir d'une face supérieure et/ou d'une face inférieure de la partie de matière de tissu (25) et/ou le dispositif de retrait (45) comporte au moins un dispositif d'aspiration (46) qui aspire la partie de matière de tissu (25) à partir d'une face supérieure de la partie de matière de tissu (25).

3. Système selon la revendication 2, dans lequel un élément de serrage (47) presse la partie de matière de tissu (25) contre le dispositif d'aspiration (46) à partir d'une face inférieure de la partie de matière de tissu (25).

4. Système selon l'une des revendications précédentes, dans lequel le support linéaire (35) et/ou le module de retrait (40) est/sont réglables transversalement à la direction de transport.

5. Système selon l'une des revendications précédentes, dans lequel, dans une position de retrait (A) de la partie de matière de tissu (25), le dispositif de retrait (45) est plus bas que pendant un mouvement à l'intérieur d'une zone de transport (C) de la partie de matière de tissu (25) et/ou dans lequel, après une opération de retrait, le module de retrait (40) déplace la partie de matière de tissu (25) dans la direction de transport et le dispositif de retrait (45) libère la partie de matière de tissu (25) dans la position de dépose (B).

6. Système selon l'une des revendications précédentes, dans lequel le support linéaire (35) est réglable après une opération de retrait transversalement à la direction de transport et/ou le module de retrait (40) se déplace pendant un mouvement de la position de dépose (B) à la position de retrait (A) en étant décalé d'une distance prédéterminée transversalement à la direction de transport afin de passer de la position de retrait (A) à la position de dépose (B).

7. Système selon l'une des revendications précédentes, dans lequel la partie de matière de tissu (25) est saisie sur sa face avant et est de préférence soulevée.

8. Système selon l'une des revendications précédentes, dans lequel le module de retrait (40) comporte des capteurs afin de déterminer si la partie de matière de tissu (25) est coupée librement et, lorsque la partie de matière de tissu (25) n'est pas coupée librement, un signal de commande peut être fourni au dispositif de convoyage (30).

9. Système selon l'une des revendications précédentes, dans lequel un dispositif d'aspiration commun (46) ou plusieurs dispositifs d'aspiration (46) sont présents, lesquels dispositifs pouvant être de préférence commandés de manière sélective.

10. Système selon l'une des revendications précédentes, comprenant en outre plusieurs supports linéaires (35) ayant respectivement un module de retrait (40) ou au moins deux supports linéaires sur lesquels est agencé un module de retrait commun (40) qui peut retirer simultanément et/ou sélectivement plusieurs parties de matière de tissu (25).

11. Système selon l'une des revendications précédentes, comprenant en outre un dispositif de soulèvement qui est agencé de manière fixe au-dessus du dispositif de convoyage (30) afin de soulever simultanément et/ou sélectivement une ou plusieurs parties de matière de tissu (25), de préférence sur leur face avant.

12. Système selon la revendication 11, dans lequel un ou plusieurs modules de retrait (40, 60) du dispositif de retrait détectent et transportent dans la direction de transport jusqu'à la position de dépose (B) une ou plusieurs parties de matière de tissu (25) qui ont été au moins partiellement soulevées à partir du plan de transport par le dispositif de soulèvement.

13. Procédé pour retirer et déplacer au moins une partie de matière de tissu (25) qui repose et est acheminée sur un dispositif de convoyage (30), comprenant les étapes consistant à :
déplacer au moins une partie de matière de tissu coupée sur un dispositif de convoyage (30) jusqu'à une position de retrait (A) ;
retirer du plan de transport la au moins une partie de matière de tissu (25) coupée au moyen d'un dispositif de retrait (45), dans lequel le dispositif de retrait (45) détecte la partie de matière de tissu (25) et la reçoit et soulève dans une direction verticale à partir du dispositif de convoyage (30),
transporter la partie de matière de tissu (25) reçue au moyen d'un module de retrait (40) comportant le dispositif de retrait (45) jusqu'à une position de dépose (B), dans lequel le module de retrait (40) est fixé sur un support linéaire (35), et dans lequel le module de retrait (40) se déplace le long du support linéaire (35) s'étendant dans la direction de transport dans le même plan dans la direction de transport et à l'opposé de la direction de transport, respectivement,
libérer la partie de matière de tissu (25) saisie dans la position de dépose (B),
**caractérisé par**
un dispositif de retrait comprenant le support linéaire (35) et le module de retrait (40),
dans lequel le dispositif de retrait est agencé derrière le dispositif de convoyage (30) dans la direction de transport,
le dispositif de retrait est réglable ou mobile en ce qui concerne sa position par rapport au dispositif de convoyage (30), et
le support linéaire (35) est fixé sur un châssis de support (41), dans lequel le châssis de support (41) est en appui sur le sol et le dispositif de convoyage (30) le chevauche au moins partiellement.

14. Système de découpe et d'évacuation par transport de parties de matière de tissu (25) coupées, comprenant :
un dispositif de coupe pour couper au moins une partie de matière de tissu (25),
un système selon l'une des revendications 1 à 12 précédentes.
